# EUROPÄISCHE PATENTSCHRIFT

(11) **EP 0 777 414 B1**
(45) Veröffentlichungstag und Bekanntmachung des Hinweises auf die Patenterteilung: **03.02.1999**
(21) Anmeldenummer: 95929858.9
(22) Anmeldetag: 12.08.1995
(51) Int. Cl.: A01N 25/24, A01N 25/06

(54) **VERSPRÜHBARE FILMBILDENDE WIRKSTOFFABGABESYSTEME ZUR ANWENDUNG AN PFLANZEN**
SPRAYABLE FILM FORMING SYSTEM RELEASING ACTIVE SUBSTANCES FOR USE ON PLANTS
SYSTEME VAPORISABLE FILMOGENE LIBERANT DES PRINCIPES ACTIFS, A UTILISER SUR DES PLANTES

(30) Priorität: 27.08.1994 DE 4430449
(43) Veröffentlichungstag der Anmeldung: 11.06.1997
(73) Patentinhaber: LTS LOHMANN Therapie-Systeme GmbH, 56567 Neuwied (DE)
(72) Erfinder: HOFFMANN, Hans-Rainer, D-56566 Neuwied (DE); ROREGER, Michael, D-56566 Neuwied (DE); KLOCZKO, Malgorzata, D-53545 Linz (DE)
(74) Vertreter: Flaccus, Rolf-Dieter, Dr.
(86) Internationale Anmeldenummer: EP9503205
(87) Internationale Veröffentlichungsnummer: WO9606527

(56) Entgegenhaltungen:
- EP-A- 0 055 857
- EP-A- 0 194 770
- WO-A-87/00399
- WO-A-92/16103
- AU-B- 604 467
- CA-A- 1 286 985
- DE-C- 900 733
- FR-A- 2 374 853
- FR-A- 2 696 902
- US-A- 4 623 540

## Beschreibung

Die vorliegende Erfindung betrifft ein Sprühmittel zur Wirkstoffapplikation an Pflanzen mit einem haftklebende, wasserunlösliche und zumindest teilweise biologisch abbaubare, wirkstoffhaltige Filme bildenden Polymermaterial.

Praxisübliche Wirkstoffzubereitungen, die bei Pflanzen angewendet werden, sind Emulsionskonzentrate, Suspensionskonzentrate oder sog. Wettable Powder (befeuchtbarer Staub), die mittels unterschiedlicher Spritzgeräte, Sprüh- oder Vernebelungsvorrichtungen (z.B. Sprühdosen) appliziert werden. Diese konventionellen Zubereitungen haben jedoch den Nachteil, daß bei ihrer Anwendung eintretende Wirkstoffverluste zur Kontaminierung der Umweltkompartimente (Luft, Boden, Wasser) beitragen. Dieses Problem wird sowohl durch das Ablaufen bzw. Abtropfen von Spritzflüssigkeit von Pflanzenoberflächen und das Abwaschen unter Regenwassereinwirkung als auch durch die Abdrift während der Applikation verursacht. Nachteilig bei diesen Wirkstoffzubereitungen sind auch ihre unzureichende Retention (Haftenbleiben) sowie mangelhafte Benetzbarkeit der Pflanzenoberflächen. Diese Unzulänglichkeiten stellen ein häufiges Hindernis beim Erzielen der gewünschten Wirkung dar.

In dem Bestreben, diese Nachteile zu minimieren, wurden in der Vergangenheit zahlreiche Versuche unternommen, um den Einsatz von Spritz- und Spruhmitteln optimal zu gestalten.

Dem Stand der Technik entsprechend lassen sie sich wie folgt zusammenfassen:
1. Durch Zusatz verschiedener Stoffe wie z.B. oberflächenaktiver Substanzen, Substanzen zur Verhinderung der Eintrocknung, Wiederbefeuchtungsstoffe, hygroskopische Zusätze, Schaumbildner und insbesondere Haftvermittler werden Anwendungseigenschaften von Spritzmitteln ver bessert.
2. Durch elektrostatische Beladung der Spritzflüssigkeit wird ihr gezieltes Positionieren an Pflanzenoberflächen wesentlich erleichtert.
3. Durch Modifikation der Tröpfchengröße und des Spritzdruckes sowie der Sprühdistanz können die Retentions- und Benetzungseigenschaften verbessert werden.

In keinem dieser Fälle gelingt es jedoch, eine zufriedenstellende Lösung für die Abdrift- und Umweltbelastungsproblematik zu realisieren.

Zur Abhilfe dieses Nachteils wurden verbesserte Wirkstoffabgabesysteme entwickelt, die eine Alternative zu den herkömmlichen Spritz- und Sprühmitteln darstellen. Es handelt sich hierbei um Depotzubereitungen in Form von flächigen, pflasterähnlichen, haftfähigen bzw. haftklebenden Systemen, die an der pflanzlichen Sproßachse appliziert werden. Durch diese Wirkstoff-Darreichungsform ist dem Problem der Wirkstoffverluste und der damit verbundenen Umweltkontamination wirksam begegnet, doch bringt ihr Einsatz zahlreiche neue Probleme mit sich, die hauptsächlich durch die Anwendung bedingt sind. Bei dieser Art von Vorrichtungen ist es nämlich außerordentlich wichtig, daß die Größe ihrer Kontaktfläche zur Pflanze so bemessen ist, daß sie nicht über Pflanzenteile hinausragen. Somit gestaltet sich ihre Anwendung bei Pflanzen deren Wuchsform die Wahlmöglichkeiten des Applikationsortes limitiert, wie dies z.B. bei zahlreichen sog. "Bodendeckern" der Fall ist, sehr problematisch. Auch die Applikation solcher Systeme bei Pflanzen, deren Oberfläche mit Stacheln oder Dornen besetzt ist, muß kritisch beurteilt werden.

Weiterhin ist die Anwendung dieser Systeme bei Pflanzen mit intensivem Dickenwachstum mit Problemen behaftet, weil die stengelumfassende Applikation mit der Gefahr verbunden ist, daß es im Falle einer zu geringen Dehnbarkeit der Trägerfolie zur Strangulation oder zum Einwachsen in die Sproßachse und somit zur Beschädigung der darunter liegenden Gewebeschichten kommen kann.

Schließlich erfordert die Anwendung solcher Systeme einen relativ hohen Zeit- und Arbeitsaufwand nicht nur bei der Applikation, sondern darüber hinaus, weil sie nach abgeschlossener Behandlung wieder entfernt werden müssen. Hierzu kommt die Entsorgungsproblematik, die steigende Kosten verursacht.

Verallgemeinernd ergibt sich aus diesem Stand der Technik, daß dieser zwar einen wesentlichen Fortschritt hinsichtlich der Verringerung der erforderlichen Wirkstoffaufwendungen, der Applikationshäufigkeit und unerwünschter Wirkungen auf andere Organismen erzielt hat, doch ist dies auf Kosten anderer Eigenschaften geschehen.

Eine andere Art der Wirkstoffabgabesysteme stellen filmbildende versprühbare Formulierungen dar. Im Stand der Technik sind solche bereits aus den Patentschriften SU 1364267, DE 2804563, JP 66009674 und US 4923698 bekannt.

Die Publikation SU 1364267 befaßt sich mit einer filmbildenden Formulierung auf Basis von Carboxymethylcellulose, die bei der Lagerung landwirtschaftlicher Erzeugnisse, insbesondere bei der Aufbewahrung von Früchten und Gemüse, Verwendung findet. Hierzu wird das einzulagernde Erntegut mittels einer Spritzung oder Tauchung behandelt, um auf der Oberfläche der Pflanzenorgane einen dünnen Film zu erzeugen, der sie aufgrund seiner physikalischen Eigenschaften von unnötigen Wasserverlusten schützt und somit ihre Lagerfähigkeit verbessert. Die Druckschrift enthält jedoch keinen Hinweis darauf, daß es sich hier um eine Zubereitung handelt, die Wirkstoffe enthält.

Die Patentschrift DE 2804563 offenbart dagegen eine wirkstoffhaltige filmbildende Zubereitung. Beschrieben wird hier eine Vogel-Repellents enthaltende Formulierung, die als Mittel gegen Knospenfraß bei Nutz- und Blütensträuchern eingesetzt wird. Es handelt sich dabei um eine wässrige Polymerdispersion, die man zusammen mit dem Wirkstoff während der Spritzflüssigkeitszubereitung in Wasser einrührt, die aber auch als wirkstoffhaltiges Spritzpulver konfektioniert werden kann. In beiden Fällen dienen die inkorporierten Basispolymere, wie z.B. Homo- oder Copolymerisate des Vinylacetats oder Acrylsäureester, als Haftvermittler.

Aus der japanischen Patentpublikation JP 6445100 ist eine weitere wirkstoffhaltige filmbildende Formulierung bekannt. Hierbei handelt es sich um eine Zubereitung von repellenten Wirkstoffen gegen Nagetiere, wobei sie auf Grundlage eines anorganischen Wirkstoffabsorbers (wie z.B. Kaolin, Talkum) aufgebaut ist. Der Zusatz von Polymer-Haftvermittlern, wie Methyl- bzw. Carboxymethylcellulose, Polyvinylalkohol oder Harnstoff führt zur Ausbildung einer an Pflanzenoberflächen haftenden, wasserunlöslichen Filmschicht, die aufgrund ihres Gehaltes an repellenten Substanzen einen Schutz gegen Nagetiere bietet.

Die Schrift US 4923698 befasst sich mit filmbildenden nicht-polymerhaltigen Zubereitung von Insektiziden bzw. Insekten-Repellents. Vorgeschlagen wird hier eine Formulierung auf Basis von Wasser/Öl-Emulsion, die neben den bioaktiven Substanzen Gleitmittel enthält. Diese sorgen dafür, daß der durch das Verdunsten der überwiegenden Anteile der Öl- und Wasserphase erzeugte Film eine Beschaffenheit besitzt, die eine Fortbewegung von laufenden Insekten auf seiner Oberfläche unmöglich macht. Darüber hinaus können die im Film enthaltenden Wirkstoffe durch ihre direkte Einwirkung auf die Schadinsekten den Erfolg bei der Schädlingsabwehr wesentlich erhöhen.

Anschließend sei im Zusammenhang mit filmbildenden versprühbaren Wirkstoffzubereitungen auf die Artikel in den Fachzeitschriften Hort Science (20,50 : 879-881) und Plant Disease (67 : 212-214) verwiesen, in denen versuchsmäßiger Einsatz derartiger Entwicklungen bei Pflanzen zur Bekämpfung von Blattkrankheiten beschrieben ist.

Diesen bekannten wirkstoffhaltigen, versprühbaren Formulierungen mt Filmbildungsvermögen ist der schwerwiegende Nachteil gemeinsam, daß die nach ihrer Ausbringung enstandenen Filme, bedingt durch ihren hydrophilen Charakter, nur für eine relativ kurze Zeit die Pflanzenoberfläche bedecken. Aufgrund der mangelnden Fähigkeit zur permanenten Haftung sind diese Formulierungen zur systemischen Abgabe von Wirkstoffen an den pflanzlichen Organismus ungeeignet. Damit die Wirkstoffe dem pflanzlichen Organismus in Konzentrationen zugeführt werden, bei denen sie eine anhaltende systemische Wirkung entfalten, müssen sie über eine ausreichend lange Zeit an der Pflanzenoberfläche vorhanden sein.

Die Hauptfunktion dieser Formulierungen liegt darüber hinaus nicht in der Verabreichung von Wirkstoffen an die Pflanze, sondern im äußerlichen Schutz der Pflanze vor Schadorganismen. Somit ergeben die bekannten Applikationssysteme keine befriedigende Lösung der aufgezeigten Problematik bei der Verabreichung von biologisch aktiven Substanzen an pflanzliche Organismen.

Der Stand der Technik läßt damit den Wunsch der gartenbaulichen Praxis nach umweltverträglichen, in der Handhabung unproblematischen Wirkstoff-Depotzubereitungen für Pflanzen nach wie vor offen.

Die Aufgabe der vorliegenden Erfindung besteht darin, eine versprühbare, wirkstoffhaltige, filmbildende, haftklebende, wasserunlösliche und zumindest teilweise biologisch abbaubare und die Umwelt vorzugsweise nicht belastende Zubereitung vorzuschlagen, durch welche Wirkstoffabgabesysteme geschaffen werden, die Vorteile der konventionellen Sprühsysteme und der sog. controlled-release-Formulierungen in sich vereinen, ohne ihre Nachteile in Kauf zu nehmen.

Die Lösung der Aufgabe gelingt in überraschender Weise mit dem eingangs genannten Sprühmittel gemäß Hauptanspruch, welches die vorgenannten Forderungen in vollem Umfang erfüllt. Weitere erfindungswesentliche Ausgestaltungen der Wirkstoff-Zubereitung sind entsprechend den Unteransprüchen vorgesehen.

Zwar sind aus der WO 87/00399 auch als Wundbehandlungssprays für Gehölze brauchbare Zusammen-setzungen auf der Basis von Methacrylat bekannt, die insbesondere gegen Pilzinfektionen angewandt werden sollen, jedoch wird hier ein besonders lang anhaltender Verbleib (z.B. 2-3a) auf dem Pflanzenmaterial angestrebt. Das gleiche gilt für die emulgierbaren Imidan-Konzentrate mit acrylischem oder Styrolharz und oberflächenaktivem Mittel zur Behandlung von Blattpflanzen gemäß US-PS 4 623 540.

Erfindungsgemäß wird dagegen durch den zumindest teilweise biologisch abbaubaren Filmbildner eine angemessene Behandlungsdauer bei gleichzeitig minimierter Umweltbelastung erreicht.

Unter der Bezeichnung "versprühbare, filmbildende Zubereitung" werden Zubereitungen verstanden, die nach Auftrag mittels Sprühen auf ein Substrat auf dessen Oberfläche einen Film erzeugen, dessen Verteilungszustand verschieden sein kann. Es können dies sowohl ein kontinuierlicher Film als auch eine diskrete, punktförmige Verteilung sowie dazwischen liegende Übergangsstufen sein.

Wesentliche Bestandteile erfindungsgemäßer Zubereitungen sind Polymere, die sowohl die Funktion der Filmbildner als auch die der Wirkstoffträger erfüllen. Solche filmbildenden, versprühbaren Polymerisatlösungen sind aus der Humanmedizin bekannt. Sie werden zur Abdeckung von Wunden an Stelle von textilem Verbandmaterial und Klebeverbänden verwendet und umgangssprachlich als Sprühpflaster bezeichnet.

Als filmbildende Substanzen zur Herstellung von erfindungsgemäßen Zubereitungen sind Ethylcellulose, Cellulosebutyrat oder -acetat sowie Polyhydroxybutyrat und Polyhydroxyvaleriat zu nennen.

Die erfindungsgemäßen Zubereitungen sind als Lösung oder Emulsion vorliegende physikalische Wirkstoff-Polymer-Kombinationen, die als Aerosole auf eine Pflanzenoberfläche gesprüht werden und nach Verdunsten der Löse- oder Emulgiermittel dünne, zusammenhängende, wirkstoffhaltige und wasserunlösliche Filme bilden.

Die in diesen Zubereitungen enthaltenen, nichttoxischen organischen Lösungsmittel sind leicht flüchtig. Im allgemeinen weisen sie einen Siedebereich von +50°C bis 180°C auf. Ihr Siedepunkt sollte jedoch nach Möglichkeit die Temperatur 150°C nicht überschreiten, um die Trocknungszeiten des erzeugten Films nicht unnötig zu verlängern. Als geeignete Lösemittel können Ethylacetat, Chloroform, Aceton, Ethanol oder deren Gemische verwendet werden. Die Menge des Lösemittels oder des Lösemittelgemisches muß so gewählt werden, daß die gesamte Zubereitung eine relativ niedrige Viskosität aufweist, die ein einwandfreies Versprühen ohne Fadenbildung gewährleistet.

Die erfindungsgemäßen Zubereitungen müssen darüber hinaus einwandfrei aerolisierbar und bei Lagerung in Aerosolbehältern stabil sein. Als geeignete Treibmittel können niedrigsiedende Kohlenwasserstoffe wie Propan, Butan, Isobutan und deren Mischungen in Form eines verflüssigbaren Gases verwendet werden. Die früher als Treibmittel häufig verwendeten halogenierten Kohlenwasserstoffe sollen aufgrund ihres hohen ozonabbauenden Potentials nicht mehr eingesetzt weren. Anstelle niedrigsiedender Kohlenwasserstoffe können Stickstoff, Kohlendioxid oder Distickstoffmonoxid als Treibgase eingesetzt werden.

Die Gesamtmenge des als Filmbildner und Wirkstoffträgersystem verwendeten Feststoffgemisches soll 0,5 bis 10 Gew.-%, vorzugsweise 4 bis 6 Gew.-%, bezogen auf die Gesamtzubereitung einschließlich Treibmittel, betragen.

Ein wesentlicher Vorteil der erfindungsgemäßen Wirkstoffzubereitung besteht darin, daß die daraus erzeugten Filme haftklebend sind. Hierdurch wird dem gravierenden Nachteil konventioneller Techniken, der unzureichenden Retention, sehr effizient begegnet. Die aus diesen Formulierungen entstandenen wirkstoffhaltigen Filme sind bevorzugt permanent klebrig. Sie haften sofort und dauerhaft an Pflanzenoberflächen und gewährleisten somit einen innigen Kontakt zum pflanzlichen Abschlußgewebe, der für eine optimale Wirkstoffabgabe unerläßlich ist. Insbesondere dann, wenn eine langfristige und anhaltende Wirkstoffzufuhr erforderlich ist, gewinnt diese Eigenschaft besondere Bedeutung. Dieses hohe Haftvermögen ist im Applikationsbereich relativ temperaturunabhängig. Auch ist die Stabilität der Filme in diesem Bereich gewährleistet. Somit eignen sie sich sowohl zum Einsatz bei Pflanzen in Innenräumen als auch für Außenanwendungen.

Aus den Haftklebeeigenschaften des Films ergeben sich für die Anwendung, insbesondere im Pflanzenschutzbereich, zusätzliche Vorteile. Aufgrund des Soforthaftvermögens können diese Filme als mechanische Barriere bzw. Falle für zahlreiche Schadinsekten fungieren, die bei flüchtiger Berührung der Filmoberfläche an ihr haften bleiben. Da es sich hier um wirkstoffhaltige Filme handelt, kommen darüber hinaus Schaderreger (z.B. Pilzsporen oder Insekten) sofort mit dem Wirkstoff in Kontakt und eine Schadwirkung wird somit verhindert.

Bei nicht haftklebenden Polymeren müssen zur Erzielung der gewünschten Eigenschaften geeignete Hilfsstoffe zugesetzt werden. Dazu dienen vor allem harzartige Stoffe wie modifizierte Naturharze, vor allem Kolophonium und dessen Derivate, Polyterpenharze, Kohlenwasserstoffharze sowie Cumaron-Linden-Harze. Als besonders geeignet seien hier Kolophoniumester (wie Foral 85 und Staybelite Ester 10) hervorgehoben. Die Menge des Harzzusatzes hängt von den gewünschten Klebeeigenschaften ab und ist nach oben hin begrenzt, da die Kohäsion der gebildeten Filme bei zu großem Harzanteil zu gering wird. Die kann von 1,0 bis 20 Gew.-% variieren und liegt üblicherweise im Bereich von 5 bis 10 Gew.-%, bezogen auf den Feststoffgehalt der Zubereitung.

Ein weiterer Vorteil der erfindungsgemäßen Zubereitungen liegt darin, daß die aus ihnen erzeugten Filme wasserunlöslich sind. Dies ist insofern von besonderer Bedeutung, als die Filme auch in niederschlagsreichen Perioden an den Pflanzenoberflächen haften bleiben. Die Haftfestigkeit der Filme bleibt somit über einen gewünschten Behandlungszeitraum unverändert.

Die Wasserbeständigkeit resultiert aus hydrophoben Eigenschaften der filmbildenden Substanz. Polyhydroxybutyrat und Hydroxybutyrat-Hydroxyvaleriat-Copolymere sowie Ethylcellulose und Cellulosebutyrat bzw. -acetat können als geeignete filmbildende Komponenten der erfindungsgemäßen Zubereitungen verwendet werden. Diese zeichnen sich durch eine Bioabbaubarkeit aus, eine Eigenschaft, die sie für den Einsatz zur Herstellung der erfindungsgemäßen Zubereitungen besonders geeignet macht.

Filme, die aus erfindungsgemäßen Zubereitungen auf Pflanzenoberflächen entstehen, müssen vorzugsweise biologisch abbaubar sein. Dies bedeutet, daß sie unter Einfluß einer biologisch aktiven Umgebung (Mikroorganismen) partiell oder vollständig zersetzt werden. Diese Eigenschaft ist insofern von besonderem Vorteil, als die Filme aufgrund ihre guten Haftklebevermögens über längere Zeiträume (z.B. eine Vegetationsperiode) als Wirkstoffdepots an den Pflanzen verbleiben können, ohne daß sie anschließend entfernt werden müssen. Der Grad der Bioabbaubarkeit ist durch die Wahl des Polymeren steuerbar. Für den Anwender dieser Zubereitungen stellt dies eine beträchtliche Zeit- und Arbeitsersparnis bei gleichzeitigem Vorteil der anhaltenden Wirkstoffzufuhr dar. Aufgrund dieser Kombination der o.a. Eigenschaften sind die erfindungsgemäßen Zubereitungen den im Stand der Technik beschriebenen Wirkstoffabgabesystemen deutlich überlegen.

Die in den Filmen nach der Erfindung enthaltenen Wirkstoffe werden kontrolliert freigesetzt, wobei ihre Freigabe auf dem Wege der Diffusion erfolgt.

Unter Wirkstoffen, die mittels der erfindungsgemäßen Zubereitungen an Pflanzen abgegeben werden können, sind Substanzen zu verstehen, mit denen Vorgänge im tierischen oder pflanzlichen Organismus beeinflußt werden. Hierzu sind in erster Linie als systemisch wirkende Pflanzenschutzmittel Insektizide, Fungizide, Akarizide, Bakterizide und Wachstumsregulatoren zu nennen.

Systemisch wirkende Insektizide sind beispielsweise Buthocaroxim, Dimethoat, Fenoxycarb, Methamyl, Oxamyl, Oxydemteton-methyl, Pirimicarb oder Propoxur.

Systemisch wirkende Fungizide sind beispielsweise Benomyl, Bromuconazol, Bitertanol, Etaconazol, Flusilazol, Furalaxyl, Fosetyl-Al, Imazalil, Metalaxyl, Penconazol, Propiconazol, Tiabendazol, Triadimefon, Triadimenol oder Triforine.

Systemisch wirkende Akarizide sind beispielsweise Clofentizin, Fenbutation-Oxyd und Hexythiazox.

Systemisch wirkende Wachstumsregulatoren sind beispielsweise Etephon und β-Indolyl-Essigsäure (IES).

Unter den systemisch wirkenden Bakteriziden ist beispielsweise Flumequine zu nennen.

Ferner können die erfindungsgemäßen Zubereitungen Wirkstoffe enthalten, die keine systemische Wirkung in der Pflanze entfalten, sondern auf der Pflanzenoberfläche verbleiben und somit eine Kontaktwirkung auf Schadorganismen ausüben. So ist es z.B. möglich, Kontaktfungizide aus der Stoffklasse der Dithiocarbamate, wie Maneb, Zineb oder Mancozeb in die erfindungsgemäßen Zubereitungen zu inkorporieren, um Pflanzenoberflächen vor lokalen Pilzinfektionen (falsche Mehltaupilze, Blattfleckenerreger, verschiedene Rosterkrankungen) zu schützen.

Ein weiteres Anwendungsbeispiel von bioaktiven Substanzen, die ihre Wirkung nicht über die Pflanze entfalten, stellen Vogel- und Insektenrepellents dar. Diese können ebenfalls mittels erfindungsgemäßen Zubereitungen an Pflanzenoberflächen aufgebracht werden und so ihre Wirkung auf die gewünschten Schadorganismen entfalten.

Wirkstoffe können in erfindungsgemäßen Zubereitungen einzeln oder in einer Mischung vorliegen. Sie können in der Polymermatrix gelöst oder dispergiert sein. Eine bevorzugte Ausführungsform erfindungsgemäßer Zubereitungen weist folgende Inhaltsstoffe auf:
a) 1,0 bis 10,0 Gew.-% Feststoffe, wobei die Feststoffe
   0,5 bis 8,0 Gew.-% mindestens eines Polymers
   0,5 bis 5,0 mindestens eines Wirkstoffes
   0,0 bis 2,0 Gew.-% Formulierungshilfsstoffe
   umfassen, bezogen auf das Gesamtgewicht der Zubereitung
b) 0,5 bis 80 Gew.-% mindestens eines flüchtigen organischen Lösungsmittels
c) 0,5 bis 80 Gew.-% mindestens eines verflüssigten Treibgases

Als Hilfsstoffe können erfindungsgemäße Zubereitungen Penetrationsförderer, Klebrigmacher, Emulgatoren und Weichmacher enthalten. Die Funktion dieser Hilfsstoffe besteht einerseits darin, den Wirkstoff der Pflanze in einer geeigneten physikalisch-chemischen Form anzubieten, und andererseits, die in einem Wirkstoff innewohnende Potenz optimal zur Wirkung zu bringen.

Durch Penetrationsförderer wird die Diffusion bioaktiver Substanz in das Leitungssystem der Pflanze hinein verstärkt. Zu diesem Zweck können beispielsweise Alkylsulfate, Alkylsulfonate, Fettsäuren, Fettsäuresalze mehrwertiger Metalle, Fettsäureester, Aminoxide, Mono-, Di- oder Triglyceride, langkettige Alkohole, Salicylsäure, 2-Pyrrolidonderivate oder Harnstoff zugesetzt werden.

Als Klebrigmacher kommen Klebharze in Betracht. Hier eignen sich besonders Kolophoniumester (Staybelite Ester 10) und synthetische Kohlenwasserstoffe (wie Escorez 1102 F).

Als Emulgatoren können beispielsweise höhere Fettalkohole, Partialfettsäureester, mehrwertige Alkohole, Partialfettsäureester von Zuckern, Polyethylenglykolfettsäureester, Polyethylenglycolsorbitan-Fettsäureester sowie Phospholipide, quartäre Ammoniumverbindungen und Pyridiniumverbindungen Verwendung finden.

Als Weichmacher eignen sich niedermolekulare Polyethylenalkohole, Glycerinester, ein- und mehrwertige Alkohole, Fette oder Wachse.

Die erfindungsgemäßen Zubereitungen können dazu dienen, bioaktive Substanzen an Pflanzen zu verabreichen, die sowohl eine systemische wie auch eine lokale Wirkung haben. Ein bevorzugtes Anwendungsgebiet der erfindungsgemäßen Zubereitungen ist der Pflanzenschutzbereich. Nützliche Sprays enthalten z.B. Ethylacetat als Lösungsmittel und geringe Zusätze von Kolophonium-Harz (Foral 85) als Klebrigmacher sowie den Wirkstoff Triticonazol in dispergierter Form. Die wirkstoffhaltige Polymerisatlösung läßt sich unter ca. 1:1 Zugabe von 50 Gewichtsteilen gleicher Anteile von Butan, Propan und Isobutan in einen Aerosolbehälter abfüllen.

## Patentansprüche

1. Versprühbare filmbildende Wirkstoffzubereitung zur Anwendung an Pflanzen, dadurch gekennzeichnet, daß daraus herstellbare Filme haftklebend, wasserunlöslich und zumindest teilweise biologisch abbaubar sind.

2. Wirkstoffzubereitung nach Anspruch 1, dadurch gekennzeichnet, daß sie folgende Inhaltsstoffe aufweist:
a) 1,0 bis 10,0 Gew.-% Feststoffe, wobei die Feststoffe umfassen, bezogen auf das Gesamtgewicht der Zubereitung,
0,5 bis 8,0 Gew.-% mindestens eines Polymers
0,5 bis 5,0 Gew.-% mindestens eines Wirkstoffs
0,0 bis 2,0 Gew.-% Formulierungshilfsstoffe,
b) 0,5 bis 80 Gew.-% mindestens eines flüchtigen organischen Lösungsmittels
c) 0,5 bis 80 Gew.-% mindestens eines verflüssigten Treibgases

3. Wirkstoffzubereitung nach den Ansprüchen 1 und 2, dadurch gekennzeichnet, daß die Polymere zumindest teilweise biologisch abbaubar und aus der Gruppe, enthaltend Polyacrylate, Cellulosederivate mit einem Substitutionsgrad ≤ 2 wie ein Celluloseether, Celluloseester oder Cellulose-Acetat-Butyrat-Mischester aus Homo- und Copolymere von Hydroxybuttersäure sowie Hydroxyvaleriansäure, ausgewählt sind.

4. Wirkstoffzubereitung nach einem oder mehreren der Ansprüche 1 bis 3, dadurch gekennzeichnet, daß diese als Hilfsstoffe Penetrationsförderer, Klebrigmacher, Emulgatoren und/oder Weichmacher enthält.

5. Wirkstoffzubereitung nach einem der vorangehenden Ansprüche, dadurch gekennzeichnet, daß sie mindestens einen an Pflanzen abzugebenden Wirkstoff aus folgenden Gruppen enthält:
Insektizide: Buthocaroxim, Dimethoat, Fenoxycarb, Methamyl, Oxyamyl, Oxydemeteton-methyl, Pirimicarb, Propoxur
Fungizide: Benomyl, Bromuconazol, Bitertanol, Etaconazol, Flusilazol, Furalaxyl, Fosetyl-Al, Imazalil, Metalaxyl, Penconazol, Propiconazol, Triabendazol, Triadimefon, Triadimenol, Triforine
Bakterizide: Flumequine
Akarizide: Clofentizin, Fenbutation-Oxyd, Hedythiazox
Wachtstumsregulatoren: Etephon, β-Indolyl-Essigsäure (IES).

6. Wirkstoffzubereitung nach einem der vorangehenden Ansprüche, dadurch gekennzeichnet, daß sie mindestens einen Wirkstoff mit Kontaktwirkung enthält, der aus folgenden Gruppen ausgewählt ist:
Fungizide: Dithiocarbamate wie Ziram, Zineb, Nabam, Mancozeb, Thiram
Insekten-Repellents: Dimethylphtalat, Indalone, N,N-diethyl-metatoluamid

7. Wirkstoffzubereitungen nach einem der vorangehenden Ansprüche, gekennzeichnet durch eine kontrollierte Wirkstofffreigabe.

8. Verwendung der Wirkstoffzubereitung nach einem oder mehreren der vorangehenden Ansprüche zur Verabreichung von Wirkstoffen an Pflanzen.

9. Verwendung der Wirkstoffzubereitung nach einem oder mehreren der vorangehenden Ansprüche zur Erzeugung von dünnen Schichten auf Pflanzenoberlächen.

10. Verwendung der Wirkstoffzubereitung nach einem oder mehreren der vorangehenden Ansprüche als Pflanzenoberflächen abdeckender, wirkstoffhaltiger Schutzfilm zur Verhütung von Pilzinfektionen sowie Saug- und Freßtätigkeit von Schadinsekten.

## Claims

1. Sprayable, film-forming active substance preparation for the application to plants characterized in that films which can be produced thereof are pressure-sensitive adhesive, insoluble in water, and at least partially biodegradable.

2. The active substance preparation according to claim 1 characterized in that it has the following components:
a) 1.0 to 10.0%-wt. of solids, the solids comprising, relative to the total weight of the preparation,
0.5 to 8.0%-wt. of at least one polymer
0.5 to 5.0%-wt. of at least one active substance
0.0 to 2.0%-wt. of formulation auxiliaries,
b) 0.5 to 80%-wt. of at least one volatile organic solvent
c) 0.5 to 80%-wt. of at least one liquefied gas propellant.

3. The active substance formulation according to claims 1 and 2 characterized in that the polymers are at least partially biodegradable and are selected from the group comprising polyacrylates, cellulose derivatives with a degree of substitution of ≤ 2, such as a cellulose ether, cellulose ester or cellulose acetate-butyrate-mixed ester of homo- and copolymers of hydroxybutanoic acid and hydroxyvaleric acid.

4. The active substance preparation according to one or several of claims 1 to 3 characterized in that it comprises as auxiliary agents penetration enhancers, tackifiers, emulsifiers, and/or plasticizers.

5. The active substance formulation according to any one of the preceding claims characterized in that it comprises at least one active substance to be supplied to plants, which belongs to the following groups:
insecticides: butocaroxim, dimethoate, fenoxycarb, methamyl, oxamyl, oxydemeton-methyl, pirimicarb, propoxur
fungicides: benomyl, bromuconazole, bitertanole, etaconazole, flusilazol, furalaxyl, fosetyl-Al, imazalil, metalaxyl, penconazole, propiconazole, thiabendazol, triadimefon, triadimenol, triforine
bactericides: flumequine
acaricides: clofentizine, fenbutatin oxide, hexythiazox
growth regulators: ethephon, β-indolylacetic acid (IAA).

6. The active substance formulation according to any one of the preceding claims characterized in that it comprises at least one active substance having contact action and which is selected from the following groups:
fungicides: dithiocarbamates, such as ziram, zineb, nabam, mancozeb, thiram
insect repellents: dimethylphthalate, indalone, N,N-diethyl-metatoluamide.

7. The active substance preparations according to any one of the preceding claims characterized by a controlled active substance release.

8. The use of the active substance formulation according to one or several of the preceding claims for the administration of active substances to plants.

9. The use of the active substance formulation according to one or several of the preceding claims for the formation of thin layers on plant surfaces.

10. The use of the active substance formulation according to one or several of the preceding claims as a protective film covering plant surfaces and comprising active substances, for the prevention of fungus infections as well as suction and voracity by pests.

## Revendications

1. Système vaporisable filmogène libérant des principes actifs, à utiliser sur les plantes, caractérisé en ce que les films préparables avec celui-ci sont autocollants, insolubles dans l'eau et au moins partiellement biologiquement dégradables.

2. Système libérant des principes actifs selon la revendication 1, caractérisé en ce qu'il comprend les composants suivants:
a) de 1,0 à 10,0% en poids de matières solides, les matières solides comprenant, rapporté au poids total du système:
de 0,5 à 8,0% en poids d'au moins un polymère,
de 0,5 à 5,0% en poids d'au moins un principe actif
de 0,0 à 2,0% en poids d'adjuvant de formulation,
b) de 0,5 à 80% en poids d'au moins un solvant organique volatil,
c) de 0,5 à 80% en poids d'au moins un gaz propulseur liquéfié.

3. Système libérant des principes actifs selon les revendications 1 et 2, caractérisé en ce que les polymères sont au moins partiellement biologiquement dégradables et sont choisis dans le groupe contenant les polyacrylates, les dérivés de la cellulose ayant un degré de substitution ≤ 2 tel qu'un éther cellulosique, un ester cellulosique ou un ester mixte d'acétate butyrate de cellulose provenant des homo- et des copolymères de l'acide hydroxybutyrique ainsi que de l'acide hydroxyvalérique.

4. Système libérant des principes actifs selon une ou plusieurs des revendications 1 à 3, caractérisé en ce celui-ci contient, comme adjuvants, des améliorateurs de pénétration, des agents collants, des émulsifiants et/ou des plastifiants.

5. Système libérant des principes actifs selon l'une des revendications précédentes, caractérisé en ce qu'il contient au moins un principe actif à fournir aux plantes et provenant des groupes suivants:
insecticide: buthocaroxime, diméthoate, phénoxycarbe, méthamyle, oxyamyle, oxydemététon-méthyle, pirimicarbe, propoxur
fongicide: bénomyl, bromuconazol, bitertanol, étaconazol, flusilazol, furalaxyl, fosetyl-al, imazalil, métalaxyl, penconazole, propiconazole, triabendazole, triadiméfon, triadiménol, triforine
bactéricide: fluméquine
acaricide: clofentizine, oxyde de phenbutation, hédythiarox
régulateurs de croissance: étéphone, acide β-indolylacétique (IES).

6. Substance libérant des principes actifs selon l'une des revendications précédentes, caractérisé en ce qu'il contient au moins un principe actif à effet de contact qui est choisi dans les groupes suivants:
fongicide: dithiocarbamate tel que Ziram, Zineb, Nabam, Mancozeb, Thiram
agent repoussant les insectes: phtalate de diméthyle, indalone, N,N-diéthylmétatoluamide

7. Système libérant des principes actifs selon l'une des revendications précédentes, caractérisé par un dégagement contrôlé du principe actif.

8. Utilisation du système libérant des principes actifs selon l'une ou plusieurs des revendications précédentes pour l'administration de principes actifs à des plantes.

9. Utilisation du système libérant des principes actifs selon l'une ou plusieurs des revendications précédentes pour la formation de couches minces sur les surfaces des plantes.

10. Utilisation du système libérant des principes actifs selon l'une ou plusieurs des revendications précédentes comme film de protection recouvrant les surfaces des plantes et contenant un principe actif pour empêcher les infections par les moisissures ainsi que les activités de succion et de broutage des insectes nuisibles.
